Europäisches Patentamt

European Patent Office

Office européen des brevets

(11) Veröffentlichungsnummer: **0 309 874 B1**

# EUROPÄISCHE PATENTSCHRIFT

(45) Veröffentlichungstag der Patentschrift: **22.04.92**

(51) Int. Cl.⁵: **G03B 42/02**

(21) Anmeldenummer: **88115432.2**

(22) Anmeldetag: **21.09.88**

(54) **Bearbeitungs- oder Behandlungsgerät für Röntgenaufnahmekassetten mit je einem blattförmigen Aufnahmematerial, vorzugsweise einer phosphorbeschichteten Folie.**

(30) Priorität: **01.10.87 DE 3733191**

(43) Veröffentlichungstag der Anmeldung:
**05.04.89 Patentblatt 89/14**

(45) Bekanntmachung des Hinweises auf die
Patenterteilung:
**22.04.92 Patentblatt 92/17**

(84) Benannte Vertragsstaaten:
**FR GB IT**

(56) Entgegenhaltungen:
**EP-A- 0 142 709          EP-A- 0 161 093**
**EP-A- 0 166 512          EP-A- 0 231 926**
**EP-A- 0 239 871          EP-A- 0 240 788**
**EP-A- 0 264 141          EP-B- 0 079 557**
**DE-B- 1 207 210          US-A- 3 111 585**
**US-A- 3 150 263**

(73) Patentinhaber: **Agfa-Gevaert AG**

**W-5090 Leverkusen 1(DE)**

(72) Erfinder: **Bauer, Walter**
**Heinrich-Wieland-Strasse 178**
**W-8000 München 83(DE)**
Erfinder: **Müller, Jürgen, Dipl.-Ing.**
**Bozzarisstrasse 7**
**W-8000 München 90(DE)**
Erfinder: **Voigtländer, Volkmar, Dipl.-Phys.**
**Goethestrasse 3**
**W-8031 Eichenau(DE)**

## Beschreibung

Die Erfindung betrifft ein Bearbeitungsgerät für Röntgenaufnahmekassetten mit je einem blattförmigen, für Röntgenstrahlen empfindlichen Aufnahmematerial, wobei das Gerät einen Eingabeschlitz und einen getrennten Ausgabeschlitz für die Kassetten aufweist und wobei diese Schlitze lichtdicht verschließbar sind.

Ein Bearbeitungsgerät dieser Art ist beispielsweise als Kassettenent- und Beladegerät für Kassetten mit fotografischem Röntgenbild bekannt durch die US-PS 3,150,263. Dabei werden die Kassetten einzeln von Hand eingegeben und es besteht keine Möglichkeit, sie automatisch von einem Stapel oder Magazin in das Gerät einzuziehen. Durch die DE-PS 12 07 210 oder die US-PS 3,111,585 sind Kassettenmagazine verschiedener Ausgestaltung bekannt, aus denen die Kassetten in ein Ent- oder Beladegerät automatisch transportiert werden können. Diese bekannten Anordnungen sind teilemäßig und bezüglich ihres Platzbedarfes sehr aufwendig und erfordern bezüglich der Anordnung der Kassetten in den Magazinen bzw. in der Wartestellung erheblichen Bedienungsaufwand.

Auch durch die EP 0079557 B1 ist eine Kassette der eingangs genannten Art bekannt, wobei jedoch das auf Röntgenstrahlen empfindliche Aufnahmematerial durch eine mit stimulierbarem Phosphor beschichtete Folie gebildet wird. Gemäß dem Bekannten muß diese Kassette ebenfalls mit der Folie be- und entladen werden, wobei zumindest eine Entladung zur Bearbeitung der Folie notwendig ist. Ein Verfahren zur Verwendung einer derartigen Kassette ist außerdem bekannt durch die EP 0142709 A2 sowie durch auf dem Markt befindliche Geräte. Derartige bekannte Verfahren und Vorrichtungen für derartige Kassetten mit einer phosphorbeschichteten Aufnahmefolie beruhen im wesentlichen darauf, daß bei der Belichtung der in der Kassette befindlichen Folie mit Röntgenstrahlen ein latentes Bild entsteht. In einer Lesestation wird nach dem Entnehmen der Folie aus der Kassette mittels eines Laserstrahlscanners das latente Bild zum Leuchten gebracht (der Phosphor stimuliert) und das hierbei ausgesandte Licht in digitale elektrische Bildsignale umgesetzt, die auf einem Bildschirm oder in einem Bildschirmaufnahmegerät oder in einem computergesteuerten Laserstrahlaufnahmegerät wieder zu einem sichtbaren Bild umgewandelt werden können. Dann wird das Restbild gelöscht und die Folie einem Kassettenbeladegerät zugeführt. Die Identifizierungsdaten auf den Identifizierungsmitteln der Folie müssen dabei, soll ihr Sinn erreicht werden, mit einem hierfür geeigneten gesonderten Lesegerät ausgelesen und in digitale elektrische Identifizierungssignale umgesetzt und den digitalen Bildsignalen zugeführt werden. Ein Nachteil des bekannten Verfahrens ist darin zu sehen, daß die Folie zwischen dem Entnehmen aus der Kassette in der Lesestation und dem Wiedereinführen in die Kassette in einem Kassettenbeladegerät, gegen mechanische Einflüsse ungeschützt, ziemliche Wege zurücklegen muß, wodurch eine vorzeitige Abnutzung der Phosphorschicht bedingt sein kann. Auch für die Bearbeitung der Kassetten bzw. Folien müssen die Kassetten einzeln in die Lesestation von Hand eingeführt werden und werden einzeln ausgegeben.

Der Erfindung liegt die Aufgabe zugrunde, mit einfachsten Mitteln eine Stapelung zu bearbeitender Kassetten vor und nach dem jeweiligen Gerät und deren nacheinander erfolgende automatische Einführung in das Gerät zu ermöglichen. Dabei kann das Gerät ein herkömmliches Kassettenent- und -beladegerät oder auch eine Lesestation für phosphorbeschichtete Folien sein.

Diese Aufgabe wird erfindungsgemäß durch die Merkmale des Anspruchs 1 gelöst. Weitere vorteilhafte Merkmale der Erfindung sind den Unteransprüchen entnehmbar.

Durch die Erfindung ist es möglich, zu behandelnde Kassetten einfach lose in den Eingabestapelbehälter zu stellen. Nach der Bearbeitung werden sie dann automatisch lose im Ausgabestapelbehälter abgestellt. Dabei könnte im Gerät eine herkömmliche Kassette entladen und mit neuem Film auf herkömmliche Art neu beladen werden. Vor allem ist die Erfindung aber vorgesehen für ein Lese- oder Auswertgerät für phosphorbeschichtete Folien. Dabei ist von besonderem Nutzen, wenn die gelöschte Phosphorfolie wieder in dieselbe in das Auswertgerät eingezogene Kassette eingegeben und die somit wieder gebrauchsfähige Kassette aus dem Gerät ausgegeben und in einem Ausgabestapelbehälter gestapelt wird. Diese Ausbildung gemäß den Unteransprüchen hat zusätzlich zu der Möglichkeit, zu behandelnde Kassetten als Stapel vor dem Gerät aufzustellen und wieder als Stapel zurückzuerhalten, folgende Vorteile:

1. Der Benutzer hat mit der Folie nichts zu tun. Er bekommt sie nie zu Gesicht, außer bei nach sehr langer Benutzung erforderlichem Folienwechsel.

2. Es entfällt ein gesonderter Kassetten-Beladevorgang samt Kassetten-Beladegerät.

3. Es kann immer davon ausgegangen werden, daß eine Kassette gefüllt ist.

4. Durch die Zurückführung einer Folie in immer dieselbe Kassette in der Lesestation muß die Folie nur äußerst kurze Wege außerhalb der Kassette zurücklegen, wodurch sie gegen Beschädigungen beim Transport bzw. gegen Abnutzung besser geschützt ist als bei bekannten Bearbeitungsverfahren für Kassetten mit phosphorbeschichteten Folien. Dieses Verfahren ist daher auch dann mit Vorteil anwendbar, wenn die Patientendaten nicht auf einem Speicher auf der Kassette gespeichert werden, sondern auf andere Weise den digitalisierten Bildsignalen beigefügt werden, z.B. über einen lesbaren Speicher auf der Folie oder durch direkt den Bildsignalen über eine Tastatur an der Lesestation zugefügte Datensignale.

Die Erfindung wird anhand von Zeichnungen näher erläutert. Es zeigen

Fig. 1     eine Gerätekombination mit einem erfindungsgemäßen Bearbeitungsgerät mit Stapelbehältern für Röntgenaufnahmekassetten zur Erläuterung einer Anwendungsmöglichkeit des Gerätes,

Fig. 2     eine perspektivische Außenansicht des erfindungsgemäßen Gerätes mit Stapelbehältern für Kassetten,

Fig. 3     einen Schnitt durch den Eingabestapelbehälter nach Figur 2 gemäß der Schnittlinie III-III,

Fig. 4     einen Schnitt durch den Ausgabestapelbehälter nach Figur 2 gemäß der Schnittlinie IV-IV,

Fig. 5     eine aufgebrochene, schematische, perspektivische Darstellung von dem Kassettentransport in einem Gerät nach Figur 2 dienenden Baugruppen,

Fig. 6     eine perspektivische Darstellung von möglichen Kassettenhandhabungsvorrichtungen nach Figur 2,

Fig. 7 bis 9     schematische Darstellungen der Stellungen der Baugruppen nach den Figuren 5 und 6 zu Kassettendurchführschlitzen bzw. den Stapelbehältern in verschiedenen Stadien des Kassettentransports durch das Gerät nach Figur 2.

Die Erfindung geht aus von herkömmlichen Röntgenaufnahmekassetten für plane, röntgenstrahlenempfindliche Aufnahmematerialien. Diese Kassetten bestehen aus zwei gegeneinander schwenkbaren Gehäuseteilen, nämlich einem Boden- und einem Deckelteil, wobei gewöhnlich das Bodenteil dem Patienten bzw. den Röntgenstrahlen zugewandt ist. In den Kassetten befinden sich Andruckmittel für das Aufnahmematerial, z.B. eine Schaumstoffplatte. Diese Kassetten sind daher in den Figuren nur schematisch dargestellt und mit 1 beziffert. Diese Kassetten 1 einer jeweils im wesentlichen einheitlichen Bauart mit Mitteln 1a zum Ver- und Entriegeln des Deckelteiles sind in verschiedenen Größen für die vorkommenden Aufnahmeformate vorhanden. Im besonderen kann sich in den Kassetten 1 kein fotografischer Röntgenfilm befinden, sondern eine Aufnahmefolie 2, die mit einer Schicht von stimulierbarem Phosphor beschichtet ist. Auf dieser entsteht bei Belichtung mit Röntgenstrahlen ein latentes Bild, das durch Abtasten mit einem Laserstrahl stimuliert und in digitale elektrische Bildsignale umgewandelt und abgespeichert wird. Die gespeicherten Bildsignale können dann an einem Bildschirm als sichtbares Bild betrachtet werden. Dementsprechend kann eine sog. Hardcopy auf gewöhnlichem fotografischem Film durch bekannte Verfahren und Geräte hergestellt werden.

An der Deckelaußenfläche einer jeden Kassette 1 in einer bestimmten Lage zu einem Bezugspunkt, die bei allen gleichartigen Kassetten unterschiedlicher Formate gleich ist, ist ein Daten in digitaler Form speichernder, beschreib- , les- und löschbarer Speicher 3 befestigt, der nachfolgend der Einfachheit halber und zur Unterscheidung von anderen Speichern als Kassettenspeicher bezeichnet wird. Von dem Kassettenspeicher 3 sind nur die Lagerplatine und die Anschlußkontakte sichtbar. Als Bezugspunkt für die Lage des Kassettenspeichers 3 kann eine bestimmte Kassettenecke 1b dienen, die in den Bearbeitungsgeräten für die Kassetten 1 bei Kassetten aller Formate an derselben Stelle im jeweiligen Gerät positioniert wird.

Die Benutzung der Kassette 1 der beschriebenen Art mit einer phosphorbeschichteten Folie 2 und einem auf einer Kassettenflachseite fest angeordneten, beschreib-, les- und zumindest teilweise löschbaren Speicher 3 soll nun nach einem besonderen, folienschonenden, Arbeitsgänge sparenden Handhabungsverfahren erfolgen. Dabei wird zunächst das bekannte Grundkonzept der Bearbeitung phosphorbeschichteter Folien 2 erläutert, wobei das bei der Belichtung der Folie 2 mit Röntgenstrahlen in einem Röntgengerät 5 entstandene latente Bild in einer Lese- oder Auswertstation 6 nach dem Entnehmen der Folie 2 aus der Kassette 1 mittels eines Laserstrahlscanners 6a über einen Drehspiegel 6b vorzugsweise bei Weiterbewegung der Folie 2 stimuliert wird, das hierbei ausgesandte Licht über eine Faseroptik und einen Fotomultiplier 6c in digitale elektrische Bildsignale umgesetzt und anschließend das Restbild auf der Folie 2 durch Belichtung mit sichtbarem Licht mittels einer Lampe 6d gelöscht wird. Die digitalen Bildsignale werden in einem Zentralspeicher 7 gespeichert und können von hier aus auf einem Bildschirm 8 wieder in ein sichtbares Bild umgewandelt werden bzw. in einem Bildschirmaufnahmegerät oder einem Laserstrahlaufnahmegerät 9 (beide Geräte sind als Hardcopy-Geräte bekannt) auf fotografisches Blattmaterial in Form eines sichtbaren Bildes aufgenommen werden. Sie können aber auch auf Disketten 10 oder dergl. zur Ablage abgespeichert werden.

Eine Verwendungsart einer Kassette 1, 2, 3 ist dann so ausgestaltet worden, daß in einer mit einer Bedienungstastatur 4a versehenen Identifikationsstation 4 die für eine spezielle Röntgenaufnahme maßgebenden bildspezifischen Daten (z.B. Patientendaten) in den Kassettenspeicher 3 eingespeichert werden, und zwar entweder unmittelbar vor oder nach der Röntgenaufnahme im Röntgengerät 5, daß in der Lesestation 6 die im Kassettenspeicher 3 gespeicherten bildspezifischen Daten gelesen und zusammen mit den digitalen Bildsignalen der in der Kassette 1 mit Röntgenstrahlen belichteten Folie 2 im Zentralspeicher 7 abgespeichert werden und zusammen mit dem zugehörigen sichtbaren Bild sichtbar bzw. im Hardcopy-Gerät 9 fotografiert werden. Das Löschen der bildspezifischen Daten im Kassettenspeicher 3 nach deren Auswertung in der Lesestation 6 kann entweder an der Leseeinrichtung 6e für den Kassettenspeicher 3 in der Lesestation 6 oder beim Neubeschreiben des Kassettenspeichers 3 in der Identifikationsstation 4 erfolgen. Diese Verfahrensvariante hängt von der Geräteausgestaltung ab.

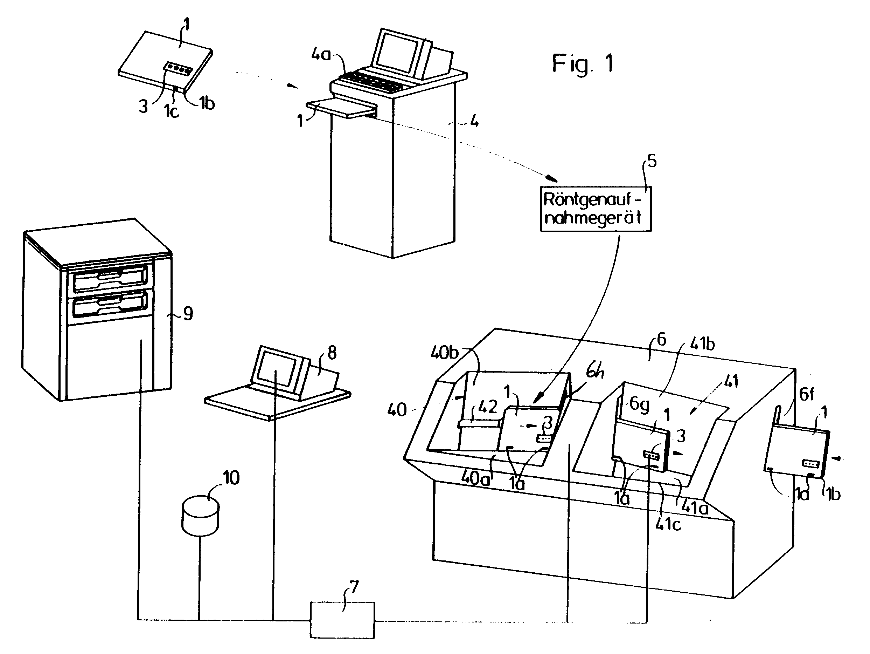

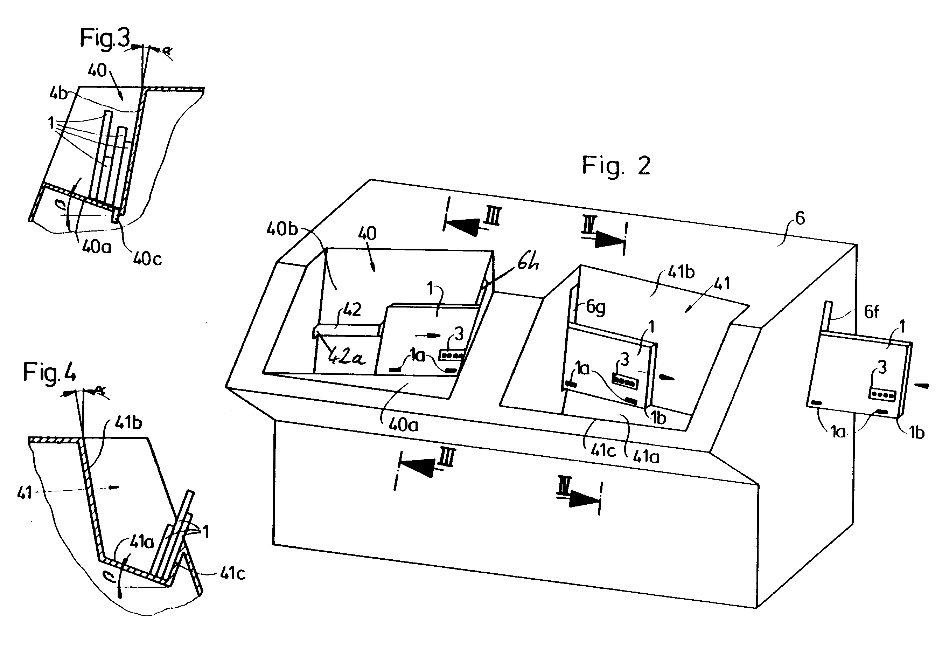

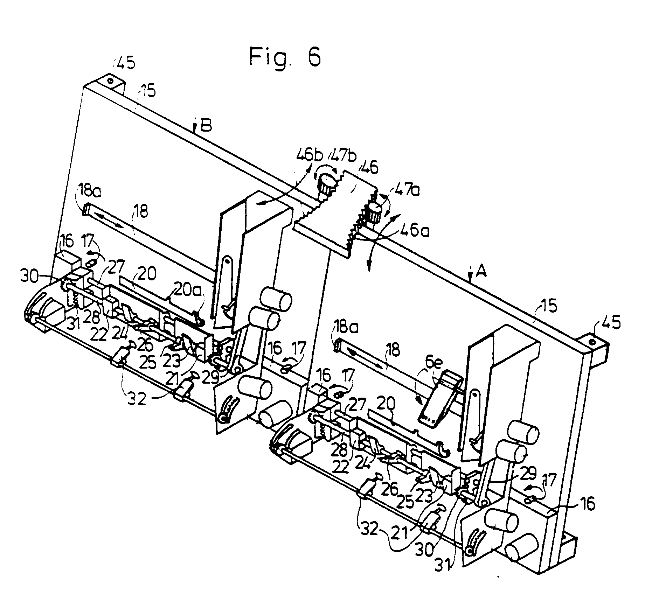

Zur Bearbeitung bzw. Handhabung von Kassetten 1, 2, 3 kann eine belichtete und mit eingespeicherten bildspezifischen Daten versehene Kassette 1 in das Auswertgerät 6 in Pfeilrichtung in einen Eingabeschlitz 6f oder 6h (vgl. Fig. 1, 2, 7 bis 9) eingegeben und dort positioniert werden, worauf dann die bildspezifischen Daten aus dem Kassettenspeicher 3 mittels einer Leseeinrichtung 6e (vgl. Fig. 6) gelesen, anschließend die Kassette 1 geöffnet und die Folie 2 der Kassette 1 entnommen werden und schließlich die Folie 2 nach der schon beschriebenen Umsetzung des auf ihr enthaltenen latenten Bildes in die digitalen Bildsignale und deren Einspeicherung in den Zentralspeicher 7 sowie anschließendem Löschen des Restbildes auf der Folie 2 wieder in dieselbe Kassette 1, aus der sie entnommen worden ist, zurücktransportiert wird. Dann wird die wiederbeladene Kassette aus einem Ausgabeschlitz 6g wieder gebrauchsfertig ausgegeben.

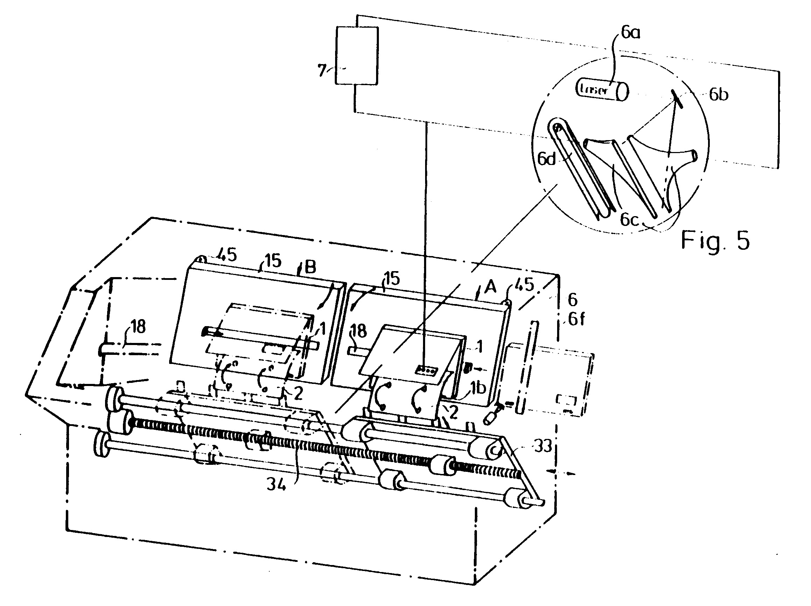

Wie den Figuren 5 bis 9 entnehmbar ist, wird die in die Auswertstation 6 eingegebene Kassette 1 zwischen der Entnahme der Folie 2 und der Wiedereingabe der Folie 2 im wesentlichen geradlinig durch die Auswertstation 6 transportiert. An einer ersten Stelle wird sie jedoch angehalten und so weit abgesenkt, daß sie von einer an sich bekannten Positionier- und Entladevorrichtung erfaßt, geöffnet und entladen und geschlossen wird. Danach wird sie wieder auf ihre Transportbahn gehoben und in eine zweite Stellung befördert, in der sie wieder an eine der ersten gleichartigen Positionier- und Beladevorrichtung übergeben wird. In dieser zweiten Positionier- und Beladevorrichtung wird sie wieder positioniert, geöffnet und mit der inzwischen bearbeiteten Folie 2 erneut beladen, geschlossen und aus dem Ausführschlitz 6g gebrauchsfähig wieder ausgegeben. Die der Kassette 1 in der ersten Positionier- und Entladevorrichtung entnommene Folie 2 wird auf bekannte Weise in eine ebenfalls bekannte Planfilmbühne 33 eingeführt und in dieser geradlinig und in derselben Richtung wie die Kassette 1 durch ihre Bearbeitungsstationen bewegt und dann in der zweiten Positionier- und Beladevorrichtung wieder in die Kassette zurückgeführt. Die Folie 2 legt also außerhalb der Kassette nur ein zur Kassettenbewegung parallel verlaufendes, sehr kurzes Wegstück zurück, wobei eine getrennte Übergabe von Kassette und Folie in ein Beladegerät entfallen, also die Folie vor Abnutzung geschont und eine gesonderte Beladezeit sowie ein besonderes Beladegerät selbst eingespart werden.

Das Positionieren der Kassetten zum Auslesen des Kassettenspeichers 3 und zur Entnahme der belichteten Folie sowie das Zurückführen derselben in die Kassette in der Auswertstation 6 kann durch jede hierfür von Kassettenent- und Beladegeräten her bekannte Vorrichtung erfolgen, z.B. durch die Ent- und Beladevorrichtung nach der DE 35 44 719 C1. Daher wird zunächst ein Beispiel für die beiden gleichen Vorrichtungen zum Kassettenpositionieren und Ent- bzw. Beladen anhand der Figur 6 nur kurz und schematisch beschrieben. Dabei liegt seitlich hinter dem Kassetteneinführschlitz 6f der Auswertstation 6 je eine Lager- und Führungsplatte 15. Mit der unteren Begrenzung des vertikalen Einführschlitzes 6f fluchtet je eine Führungs- und Auflagebahn 16 für die Kassetten mit wenigstens einer antreibbaren Reibrolle 17. Ist eine Kassette 1 in den Einführschlitz 6f eingegeben und bis zur Reibrolle 17 geschoben worden, so wird sie von dieser erfaßt und bis zu einem Transportband 18 mit Mitnehmern 18a, von denen nur einer sichtbar ist, geschoben. Die Kassette wird bis zur ersten Positioniervorrichtung A bewegt. Später zu beschreibende schwenkbare Führungskufen 20 übergeben sie in den Bereich der Positionierungsmittel. Diese bestehen je aus einem festen Anschlagwinkel 21 und einem mit diesem fluchtenden, verschiebbaren Anschlagwinkel 22. Zwischen beiden sind dreh- und verschiebbare Riegel 23, 24 zum Entriegeln des Kassettendeckels und drehbare Hebel 25, 26 zum wieder Schließen des Kassettendeckels angeordnet. Der Anschlagwinkel 22 samt dem ihm zugeordneten Riegel 24 und Hebel 26 ist auf einer Stange 27 verschiebbar und zusammen mit Riegel 23 und Hebel 25 auf einer Welle 28 gelagert, die über einen fest damit verbundenen Kurbeltrieb 29 drehbar und über fest mit ihr verbundene Zahnräder 30, die mit Zahnstangenstücken 31 kämmen, aufwärts und abwärts verschiebbar ist. Beim Eingeben einer Kassette nimmt die Welle 28 ihre obere Stellung ein, in der die durch sie nicht verdrehbaren Winkelstücke 21, 22 etwa in oder unter der Ebene der Bahn 16 bzw. Führungskufe 20 liegen. Die Kassette wird also durch die Führungskufe 20 von der Ebene der Bahn 16 in den Bereich der Winkelstücke 21, 22 geschoben. Dann wird das bewegliche Winkelstück 22 gegen das feste Winkelstück 21 geschoben, so daß die Kassette zwischen beiden Winkelstücken 21, 22 positioniert wird. Nun wird die schwenkbar vor dem Kassettendeckel liegende Leseeinrichtung 6e gegen den Kassettenspeicher 3 geschwenkt, vgl. Figur 6, liest die zu speichernden Daten aus diesem aus und gibt sie - wie beschrieben - an den Zentralspeicher 7. Dann wird die Leseeinrichtung 6e wieder weggeschwenkt. Die Kurbel 29 dreht nun die Welle 28 entgegen dem Uhrzeigersinn. Dabei werden die Kassette und die Riegel und Hebel nach unten bewegt und zugleich Riegel 23, 24 und Hebel 25, 26 so gedreht und erstere auch verschoben, daß die Kassettenverriegelmittel 1a entriegelt werden und der Kassettendeckel entweder unter der Wirkung einer eigenen Feder aufspringt oder durch einen nicht sichtbaren, an der Kurbel 29 angelenkten Öffnungshaken hochgezogen wird. Mittels bekannter Sauger 32 wird nun die Folie der Kassette entnommen und in eine bekannte Filmbühne 33 (Fig. 5) (z.B. mit Vakuumhaltemitteln) eingeführt und dem Laserstrahlscanner 6a zu- bzw. an diesem vorbeigeführt. Nach dem Löschen der Folie wird sie in den Bereich der Sauger 32 der zweiten Positioniervorrichtung B für die Kassette 1 transportiert und durch diese zurück in die Kassette gelegt. Die Kassette wurde ebenfalls bereits dorthin bewegt, nachdem sie in der ersten Positioniervorrichtung A geschlossen und zurücktransportiert worden und von der ersten Führungskufe 20 auf die Ebene der Bahn 16 hochgehoben und durch die beiden etwa aneinander anschließenden Transportbänder 18 weiterbewegt worden war. Bei Erreichen der zweiten Positioniervorrichtung B wurde sie wieder angehalten und durch die zweite Führungskufe 20 wieder in die Positioniervorrichtung eingegeben, positioniert und geöffnet. Nun, nach dem Beladen mit der Folie 2 verläuft der beschriebene Ablauf mittels der Kurbel 29 rückwärts, Kassette und Welle 28 werden nach aufwärts transportiert und die Hebel 25, 26 erfassen den Kassettendeckel und drücken ihn zu. Die wiederbeladene und geschlossene Kassette wird von der zweiten Führungskufe 20 hochgeschwenkt auf die Ebene der Bahn 16.

Die Bewegung der Bühne 33 kann dabei durch bekannte Mittel, wie ein motorisch angetriebenes Schneckengewinde 34 oder einen Riementrieb erfolgen. Das Herabschwenken der Leseeinrichtung 6e auf den Kassettenspeicher 3 in der ersten Positioniervorrichtung, vgl. Figur 6, wird ebenfalls motorisch bewirkt. Beide Führungskufen 20 werden ebenfalls in nicht gezeigter Weise motorisch bewegt. Jede Führungskufe 20 weist zwei Zinken 20a auf, die die untere Kassettenschmalseite etwas untergreifen und beim Herunterschwenken in die Positioniervorrichtung bis zur endgültigen Übergabe halten bzw. wieder aus ihr herausheben. Auch einige Antriebsmotoren 35 für die Positioniervorrichtungen A, B sind schematisch angedeutet.

Wie den Figuren entnehmbar ist, ist der Eingabeschlitz 6f nur ein Hilfseingabeschlitz, in den eine besonders dringlich zu bearbeitende Kassette 1 von Hand eingebbar ist, wenn die beiden aus Kassettentransportmitteln und -führungsbahnen 16 bis 18 und Positionier-, Öffnungs-, Ent- bzw. Belade- und Schließvorrichtung, also Kassettenhandhabungsvorrichtung 21 bis 32 bestehenden, untereinander gleichen Baugruppen A und B miteinander und mit dem Hilfseingabeschlitz 6f fluchten. Für den normalen Gebrauch sind an der Vorderseite des Auswertgeräts 6 etwas zurückversetzt ein Eingabeschlitz 6h und ein Ausgabeschlitz 6g vorgesehen, die zueinander gegenläufig und schräg zur Vorderseite in das Geräteinnere führen und im wesentlichen vertikal verlaufen. Vor jedem Schlitz 6h, 6g ist ein Stapelbehälter 40, 41 angeordnet, vorzugsweise in das Gerätegehäuse eingeformt, von denen der Stapelbehälter 40, der Kassetteneingabestapelbehälter und der Stapelbehälter 41 der Kassettenausgabebehälter ist.

Um die lagerichtige Eingabe der Kassetten sicherzustellen, kann an der auf der Führungsfläche 40a aufliegenden Kassettenschmalseite nahe der Ecke 1b nach der Lehre der DE-PS 36 09 527 ein Metallaufkleber 1c angebracht sein. Dieser wirkt mit einem in der Führungsfläche 40a sitzenden Näherungsschalter 40c derart zusammen, daß bem Fehlen eines Signals dieses Schalters der Einzug der Kassette abgebrochen wird.

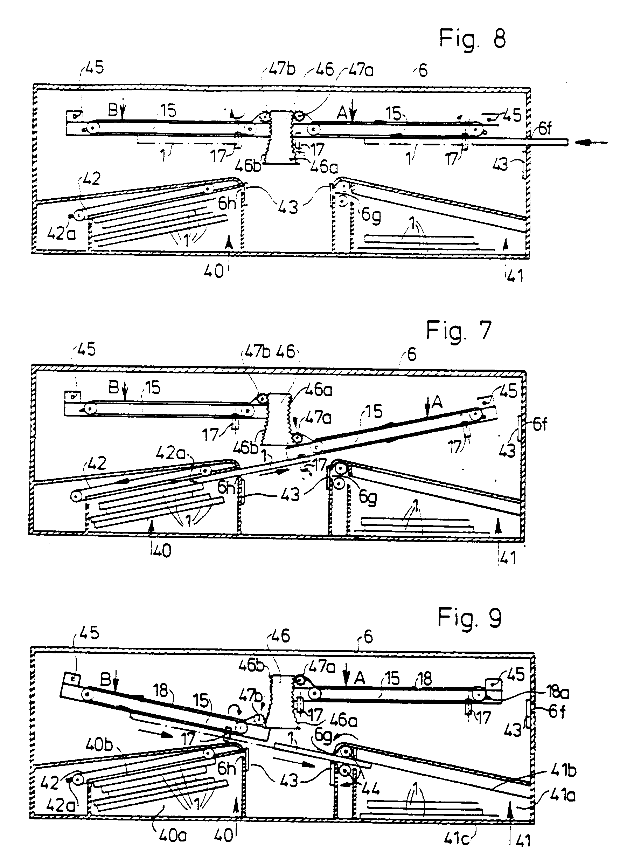

Der Eingabestapelbehälter 40 weist eine nach abwärts zum Eingabeschlitz 6h hin gerichtete Bodenfläche 40a und eine daran und an den Eingabeschlitz 6h angrenzende, mit letzterem fluchtende, nach rückwärts geneigte Rückwand 40b auf. An der Rückwand 40b sind Kassettentransportmittel, vorzugsweise ein den Transportbändern 18 gleichartiges Transportband 42 mit wenigstens einem Mitnehmer 42a angeordnet. Es wäre aber auch möglich, an der Bodenfläche 40a unmittelbar vor der Rückwand 40b den Rollen 17 entsprechende Transportrollen vorzusehen. Der Ausgabestapelbehälter 41 weist eine ebenfalls schwach nach rückwärts geneigte Rückwand 41b in der Verlängerung des Ausgabeschlitzes 6g und eine daran anschließend nach vorn zu nach abwärts geneigte Bodenfläche 41a und vor dieser eine Auffangbrüstung 41c für die Kassetten 1 auf. Die Neigungswinkel $\beta$ der beiden Bodenflächen 40a, 41a gegenüber der Horizontalen sind dabei etwas größer als die Neigungswinkel $\alpha$ der Rückwände 40b, 41b gegenüber der Vertikalen. Die Rückwände 40b, 41b sind darüber hinaus noch gegenüber der Gerätefrontseite auf die Schlitze 6h bzw. 6g zu nach hinten, also auch aufeinander zu, geneigt, wie dies den Figuren 7 bis 9 entnehmbar ist. Die Schlitze 6f bis 6h sind durch Schieber oder Jalousien 43 lichtdicht verschließbar und werden zweckmäßigerweise automatisch in von Kassettent- und Beladegeräten her bekannter Weise so gesteuert, daß sie immer verschlossen sind, wenn sich eine Kassette im Gerät befindet.

Die Kassetten 1, die im Auswertgerät 6 zu bearbeiten sind, werden nun einfach, so wie sie belichtet worden sind, in den Eingabestapelbehälter 40 gestellt und rutschen auf der schiefen Bodenfläche 40a nach rückwärts. Jeweils die unterste Kassette liegt an der Rückwand 40b an. Ist nun eine Kassette aus dem Gerät 6 ausgegeben worden, so wird automatisch der Antrieb für das Transportband 42 eingeschaltet, der Schieber 43 des Eingabeschlitzes 6h wird geöffnet und die hinterste oder unterste Kassette 1 in den Schlitz 6h automatisch hineintransportiert. Die übrigen Kassetten des Eingabestapels rutschen automatischen nach hinten nach, wobei die hinterste wieder an der Rückwand 40b zur Anlage kommt.

Nun kann die schräg nach hinten durch den Schlitz 6h transportierte Kassette 1 nicht in die Baugruppe A zwecks ihrer Entleerung eingeführt werden, wenn diese Baugruppe A die in den Figuren 5, 6 und 8 gezeigte Stellung einnimmt. Daher sind die zwischen Eingabeschlitz 6h und Ausgabeschlitz 6g vorgesehenen zwei Baugruppen A und B derart gegeneinander schwenkbar gelagert, daß die Führungsmittel 15, 16, 20 der ersten Baugruppe A entweder mit dem Eingabeschlitz 6h oder mit den Führungsmitteln 15, 16, 20 der anderen Baugruppe B fluchten können und daß die Führungsmittel der anderen Baugruppe B entweder mit denen der ersten Baugruppe A oder mit dem Ausgabeschlitz 6g oder mit im Gerät 6 vor dem Ausgabeschlitz 6g angeordneten vierten Transportmitteln, z.B. Kassettentransportwalzenpaaren 44, fluchten können. Hierzu sind die beiden Baugruppen A, B an entgegengesetzten Enden um Achsen 45 drehbar gelagert. Zum wahlweisen bzw. funktionsgerechten Schwenken der beiden Baugruppen A, B sind als Ausführungsbeispiel zwei gegenläufige Zahnkurvenstücke 46a, 46b an einem festen Trägerstück 46 angeordnet, wobei mit jedem Zahnkurvenstück 46a bzw. 46b ein mit einer der Baugruppen A bzw. B verbundenes, antreibbares Zahnrad 47a bzw. 47b in Eingriff steht.

Mindestens gleichzeitig mit, jedoch zweckmäßigerweise etwas vor dem Anlauf des Transportbandes 42 zum Transport einer neuen Kassette vom Eingabestapel durch den Eingabeschlitz 6h wird aus der Stellung nach Figur 8 das Zahnrad 47a angetrieben und schwenkt die ganze Baugruppe A nach vorwärts in die Stellung nach Figur 7, in der die Kassettenführungs- und Transportmittel der Baugruppe A mit denen des Eingabestapelbehälters 40 fluchten. Die neue Kassette wird also vom Transportband 42 und Transportmittel 17 auf die Führungsmittel 15, 16 und 20 der Baugruppe A geschoben und von dort in die Position (vgl. Figur 6) gebracht, in der sie in die Handhabungsvorrichtung 21 bis 32 einführbar ist. Dann wir mittels des Antriebs des Zahnrades 47a die Baugruppe A in die Position nach Figur 8 zurückgeschwenkt. In dieser Stellung erfolgt die Übergabe der Kassette an die Handhabungsvorrichtung 21 bis 32 (vgl. Fig. 6) und die Entnahme der Folie 2 und Übergabe an die Planfilmbühne 33 und die Auswertung der Folie 2 (vgl. Fig. 5). Die Kassette wird dann wieder geschlossen und auf die Führungsbahn 16, 20 zurückgehoben. Daraufhin wird die nun leere Kassette durch die Transportmittel 17, 18 der beiden Baugruppen A, B in die Baugruppe B weitertransportiert und in der Stellung erneut angehalten, in der sie in die Handhabungsvorrichtung 21 bis 32 der Baugruppe B einführbar ist. Die Kassette wird in der Handhabungsvorrichtung 21 bis 32 der Baugruppe B wieder positioniert, geöffnet, mit der inzwischen lagerichtig eingetroffenen, ausgewerteten und gelöschten Folie 2 mittels der Sauger 32 beladen, wieder geschlossen und zurück auf die Führungsbahn 16 der zweiten Baugruppe B gehoben. Nun wird das Zahnrad 47b der zweiten Baugruppe B angetrieben und schwenkt die Baugruppe B gemäß Figur 9 nach vorwärts, so daß die Führungsmittel 16, 20 mit dem Ausgabeschlitz 6g bzw. der Rückwand 41b des Ausgabestapelbehälters 41 etwa fluchten. Mittels der Kassettentransportmittel 17, 18 und ggf. der Transportwalzen 44 wird nun die fertig ausgewertete und wieder betriebsbereite Kassette 1 in den Augabestapelbehälter 41 geschoben. Im Ausgabestapelbehälter 41 rutscht sie aufgrund der Neigung der Bodenfläche 41a nach vorn auf die bereits an der Brüstung 41c gestapelten Kassetten. Die Baugruppe B wird anschließend in die Stellung nach Figur 8 zurückgeschwenkt und der eben beschriebene Zyklus der automatischen Kassettenverarbeitung von einem Stapel auf einen anderen Stapel kann von neuem beginnen. Dabei sind zweckmäßigerweise im Eingabestapelbehälter 40 Lichtschranken oder Näherungsschalter oder dergl. vorgesehen, die an eine bekannte Steuerschaltung, durch die sämtliche Abläufe automatisch gesteuert werden, das Vorhandensein von Kassetten im Eingabestapelbehälter 40 melden.

Der Einfachheit halber ist nur ein Ausführungsbeispiel in den Figuren dargestellt. Die gezeigten Stapelbehälter 40, 41 sowie auch die Baugruppen A, B mit Führungs-, Transport- und Kassettenhandhabungsvorrichtungen 17 bis 32 könnten auch in Kassettenent- und Beladegeräten üblicher Art angewendet werden. Dabei müßten dann die in der Baugruppe A entnommenen Filme einer Entwicklungsvorrichtung zugeführt werden und in der Baugruppe B aus Filmvorratsmagazinen ein Film entsprechenden Formats in die Kassette eingeführt werden. Aber auch die mechanische Führung der Kassetten oder der Folien oder Filme im Gerät 6 kann auf eine andere Weise erfolgen, wie sie z.B. für die Vorlagen- und Blattzuführung in Kopiergeräten bekannt ist. Die gezeigte Ausführungsform zeichnet sich aber durch besondere Einfachheit und Kompaktheit aus.

**Patentansprüche**

1. Bearbeitungsgerät für Röntgenaufnahmekassetten (1) mit je einem blattförmigen, für Röntgenstrahlen empfindlichen Aufnahmematerial, wobei das Gerät einen Eingabeschlitz (6h) und einen davon getrennten Ausgabeschlitz (6g) für die Kassetten sowie Transportmittel zur Beförderung der Kassetten vom Eingabeschlitz zum Ausgabeschlitz aufweist und wobei diese Schlitze lichtdicht verschließbar sind, dadurch gekennzeichnet,
   daß Ein- und Ausgabeschlitz (6h, 6g) im wesentlichen in vertikaler Richtung verlaufen,
   daß vor jedem der Schlitze (6h, 6g) ein Kassettenstapelbehälter (40 bzw. 41) für einen Stapel der einzugebenden bzw. auszugebenden Kassetten (1) angeordnet ist,
   daß der Eingabestapelbehälter (40) eine an den Eingabeschlitz (6h) angrenzende, mit diesem fluchtende Rückwand (40b) und eine nach abwärts zur Unterkante der Rückwand hin geneigte Bodenfläche (40a) aufweist,
   daß an der Rückwand (40b) oder an der Bodenfläche (40a) des Eingabestapelbehälters (40) weitere Transportmittel (42) für eine erste, mit ihrer Stirnseite am Eingabeschlitz (6h) und mit ihrer Flachseite an der Rückwand (40b) anliegende Kassette (1) des Stapels vorgesehen sind,
   daß der Ausgabestapelbehälter (41) eine an den Ausgabeschlitz (6g) angrenzende, mit diesem fluchtende Rückwand (41b), eine nach aufwärts zur Unterkante der Rückwand hin geneigte Bodenfläche (41a) und eine Auffangbrüstung (41c) an der der Rückwand gegenüberliegenden Seite der Bodenfläche (41a) aufweist, und
   daß die Oberkanten der Rückwände (40b, 41b) der Ein- und Ausgabestapelbehälter gegenüber den jeweiligen Unterkanten in Stapeleingaberichtung versetzt sind.

2. Gerät nach Anspruch 1, dadurch gekennzeichnet, daß der Neigungswinkel ($\beta$) jeder der Bodenflächen (40a bzw. 41a) gegenüber der Horizontalen jeweils größer ist als der Neigungswinkel ($\alpha$) jeder der Rückwände (40b bzw. 41b) gegenüber der Vertikalen.

3. Gerät nach einem der vorhergehenden Ansprüche, dadurch gekennzeichnet, daß die Rückwände (40b, 41b) unter einem Winkel zueinander stehen und daß zwischen dem Eingabeschlitz (6h) und den ihm zugeordneten Transportmitteln (42) und dem Ausgabeschlitz (6g) mindestens zwei, vorzugsweise gleiche, Baugruppen (A, B) von Kassettentransport- und Führungsmitteln (15 bis 18 und 20) vorgesehen sind, die derart gegeneinander schwenkbar gelagert sind, daß die Führungsmitte (15, 16, 20) der ersten Baugruppe (A) entweder mit dem Eingabeschlitz (6h) oder mit den Führungsmitteln (15, 16, 20) der anderen Baugruppe (B) fluchten und daß die Führungsmittel (15, 16, 20) der zweiten Baugruppe (B) entweder mit denen der ersten Baugruppe (A) oder mit dem Ausgabeschlitz (6g) oder mit im Gerät (6) vor dem Ausgabeschlitz (6g) angeordneten vierten Kassettentransportmitteln (44) fluchten, so daß eine Kassette (1) mittels der beiden Baugruppen (A, B) vom Eingabeschlitz (6h) zum Ausgabeschlitz (6g) beförderbar ist.

4. Gerät nach Anspruch 3, dadurch gekennzeichnet, daß unterhalb jeder der Baugruppen (A, B) eine Kassettenpositionier-, öffnungs-, Ent- bzw. Belade- und Schließvorrichtung, zusammen Kassettenhandhabungsvorrichtung (21 bis 32) genannt, angeordnet ist, an die eine Kassette (1) abgebbar bzw. von der eine Kassette mittels der jeweiligen Führungsmittel (16, 20) der Baugruppe (A bzw. B) zurückbewegbar ist.

5. Gerät nach Anspruch 4, dadurch gekennzeichnet, daß die Kassettenführungsmittel (16, 20) der beiden Baugruppen (A, B) ab- und aufwärts schwenkbare Führungskufen (20) aufweisen.

6. Gerät nach Anspruch 5, dadurch gekennzeichnet, daß jede Führungskufe (20) mindestens zwei Hebezinken (20a) aufweist, deren Abstand voneinander kleiner ist als eine kürzeste in Richtung der Führungskufen (20) vorkommende Kassettenlänge und durch die eine Kassette (1) untergreifbar ist.

7. Gerät nach einem der vorhergehenden Ansprüche, dadurch gekennzeichnet, daß in der Verlängerung der gegen den Eingabeschlitz (6h) schwenkbaren Baugruppe (A) in deren mit der zweiten Baugruppe (B) fluchtenden Stellung ein weiterer, lichtdicht verschließbarer Eingabeschlitz (6f) für je eine einzelne Kassette (1) vorgesehen ist.

8. Gerät nach einem der vorhergehenden Ansprüche, dadurch gekennzeichnet, daß die beiden Baugruppen (A, B) an entgegengesetzten Enden (bei 45) drehbar gelagert sind, daß zum wahlweisen Verschwenken der beiden Baugruppen (A, B) zwei gegenläufige Motore mit entsprechenden Getriebeelementen zum Erzeugen einer Schwenkbewegung vorgesehen sind.

9. Gerät nach Anspruch 8, dadurch gekennzeichnet, daß Zahnkurvenstücke (46a, 46b) an einem gemeinsamen Träger (46) zwischen den beiden Baugruppen (A, B) fest gelagert sind.

10. Gerät nach einem der Ansprüche 4 bis 9, dadurch gekennzeichnet, daß unterhalb der Kassettenhandhabungsvorrichtungen (21 bis 32) eine Planfilmbühne (33) verschiebbar ist, in die ein blattförmiges Aufnahmematerial (2) aus einer in der dem Eingabeschlitz (6) zugeordneten Handhabungsvorrichtung (A) angeordneten Kassette (1) eingebbar und aus der sie in dieselbe zwischenzeitlich in die dem Ausgabeschlitz (6g) zugeordnete Handhabungsvorrichtung (B) transportierte Kassette (1) zurückführbar ist.

11. Gerät nach Anspruch 10, dadurch gekennzeichnet, daß die Planfilmbühne (33) mit dem Aufnahmematerial (2) zwischen beiden Handhabungsvorrichtungen bzw. Baugruppen (A, B) an einer einen Laserstrahlscanner (6a, 6b, 6c, 6d) und Lichtleitmittel (6c) sowie einen daran angeschlossenen Fotomultiplier aufweisenden Auswertstation sowie einer Löschstation (6d) vorbeiführbar ist, wobei der Fotomultiplier an einen Zentralspeicher (7) angeschlossen ist.

12. Gerät nach einem der vorhergehenden Ansprüche, dadurch gekennzeichnet, daß in der Bodenfläche (40a) ein Näherungsschalter (40c) so angeordnet ist, daß er beim Zusammenwirken mit einem an einer Auflagefläche der Kassetten nahe einer Bezugsecke (1b) angeordneter Metallaufkleber (1c) ein Signal erzeigt, und daß beim Fehlen eines solchen Signals der Einzugder Kassette abgebrochen wird.

**Claims**

1. Processing apparatus for X-ray film cassettes (1) each having an X-ray sensitive exposure material in sheet form, with the apparatus having an input slot (6h) and a separate output slot (6g) for the cassettes as well as transport means for conveying the cassettes from the input slot to the output slot and with said slots being closable in a light-proof manner, characterised in that
the input and output slots (6h, 6g) extend in a substantially vertical direction,
that there is disposed in front of each of the slots (6h, 6g) a cassette stacking container (40 or 41) for a stack of cassettes (1) to be inserted or removed,
that the input stack container (40) has a rear wall (40b) adjacent to and flush with the input slot (6h) and a bottom surface (40a) sloping downwards towards the lower edge of the rear wall,
that further transport means (42) are provided at the rear wall (40b) or at the bottom surface (40a) of the input stack container (40) for a first cassette (1) of the stack lying with its front end adjacent to the input slot (6h) and its flat side adjacent to the rear wall (40b),
that the output stack container (41) has a rear wall (41b) adjacent to and flush with the output slot (6g), a bottom surface (41a) sloping upwards towards the lower edge of the rear wall and a collecting rail (41c) at the side of the bottom surface (41a) opposite the rear wall, and
that the upper edges of the rear walls (40b, 41b) of the input and output stack containers are offset in stack input direction relative to the respective lower edges.

2. Apparatus according to claim 1, characterised in that the angle of slope ($\beta$) of each of the bottom surfaces (40a and 41a) relative to the horizontal is greater than the angle of slope ($\alpha$) of each of the rear walls (40b and 41b) relative to the vertical.

3. Apparatus according to one of the preceding claims, characterised in that the rear walls (40b, 41b) are at an angle to one another and that there are provided between the input slot (6h) and its associated transport means (42) and the output slot (6g) at least two, preferably identical assembly groups (A, B) of cassette transporting and guide means (15 to 18 and 20) which are supported so as to be capable of swivelling towards one another in such a way that the guide means (15, 16, 20) of the first assembly group (A) are flush either with the input slot (6h) or with the guide means (15, 16, 20) of the other assembly group (B) and that the guide means (15, 16, 20) of the second assembly group (B) are flush either with those of the first assembly group (A) or with the output slot (6g) or with fourth cassette transporting means (44) disposed in the apparatus (6) in front of the output slot (6g), so that a cassette (1) may be conveyed by means of the two assembly groups (A, B) from the input slot (6h) to the output slot (6g).

4. Apparatus according to claim 3, characterised in that there is disposed below each of the assembly groups (A, B) a cassette positioning, opening, unloading or loading and closing apparatus, known collectively as a cassette handling apparatus (21 to 32), to which a cassette (1) may be delivered or from which a cassette may be moved back by means of the respective guide means (16, 20) of the assembly group (A or B).

5. Apparatus according to claim 4, characterised in that the cassette guide means (16, 20) of the two assembly groups (A, B) have guide runners (20) which may be swivelled downwards and upwards.

6. Apparatus according to claim 5, characterised in that each guide runner (20) has at least two lifting prongs (20a), the distance between which is smaller than the shortest cassette length occurring in the direction of the guide runners (20) and by means of which a cassette (1) may be gripped from below.

7. Apparatus according to one of the preceding claims, characterised in that a further input slot (6f) closable in a light-proof manner for an individual cassette (1) is provided in the extension of the assembly group (A), which may be swivelled towards the input slot (6h), in the position of said assembly group in which it is flush with the second assembly group (B).

8. Apparatus according to one of the preceding claims, characterised in that the two assembly groups (A, B) are rotatably supported at opposite ends (at 45), that for selective swivelling of the two assembly groups (A, B) two counteracting motors with corresponding gear elements are provided for generating a swivel movement.

9. Apparatus according to claim 8, characterised in that toothed cam segments (46a, 46b) are supported in a fixed manner on a common carrier (46) between the two assembly groups (A, B).

10. Apparatus according to one of claims 4 to 9, characterised in that below the cassette handling apparatuses (21 to 32) a sheet film stage (33) is displaceable, into which a sheet-like exposure material (2) may be fed from a cassette (1) disposed in the handling apparatus (A) associated with the input slot (6h) and from which it may be returned into the same cassette (1) which has meantime been transported into the handling apparatus (B) associated with the output slot (6g).

11. Apparatus according to claim 10, characterised in that the sheet film stage (33) may be conveyed with the exposure material (2) between two handling apparatuses or assembly groups (A, B) past an evaluation station having a laser beam scanner (6a, 6b, 6c, 6d) and light guide means (6c) as well as having a photo multiplier connected thereto, as well as past an erasion station (6d), with the photo multiplier being connected to a main memory (7).

12. Apparatus according to one of the preceding claims, characterised in that in the bottom surface (40a) a proximity switch (40c) is disposed in such a manner that, in cooperation with a metal stick-on label (1c) disposed on a contact surface of the cassettes close to a reference corner (1b), it produces a signal and, in the absence of such a signal, the draw-in process of the cassette is discontinued.

**Revendications**

1. Appareil de traitement de cassettes de radiographie (1) dont chacune contient une matière de prise de vue en forme de feuille qui est sensible aux rayons X, appareil comprenant une fente d'introduction (6h) et une fente de sortie (6g) des cassettes qui est séparée de la précédente ainsi que des organes de transport pour le transfert des cassettes de la fente d'introduction vers la fente de sortie, ces fentes étant obturables de manière étanche à la lumière, caractérisé en ce que la fente d'introduction et la fente de sortie (6h, 6g) sont orientées sensiblement en direction verticale, en ce qu'un casier d'empilement de cassettes (40 ainsi que 41) est disposé devant chacune des fentes (6h, 6g) pour une pile de cassettes (1) devant être introduites ou devant être sorties, en ce que le casier d'empilement d'introduction (40) comprend une cloison arrière (40b) avoisinant la fente d'introduction (6h) et à fleur de celle-ci, ainsi qu'une surface de fond (40a) inclinée vers le bas et vers le bord inférieur de la cloison arrière, en ce que d'autres organes de transport (42) sont prévus sur la cloison arrière (40b) ou la surface de fond (40a) du casier d'empilement d'introduction (40) pour une première cassette (1) de l'empilement dont le côté frontal est situé dans la fente d'introduction (6h) et le côté plan est appliqué contre la cloison arrière (40b), en ce que le casier d'empilement de sortie (41) comporte une cloison arrière (41b) avoisinant la fente de sortie (6g) et à fleur de cette dernière, une surface de fond (41a) inclinée vers le haut et vers le bord inférieur de la cloison arrière et un parapet collecteur (41c) situé sur le côté de la surface de fond (41a) qui est tourné à l'opposé de la cloison arrière, et en ce que les bords supérieurs des cloisons arrière (40b, 41b) des casiers d'empilement d'introduction et de sortie sont décalés par rapport aux bords inférieurs correspondants dans la direction d'introduction de l'empilement.

2. Appareil selon la revendication 1, caractérisé en ce que l'angle d'inclinaison (β) de chacune des surfaces de fond (40a ainsi que 41a) sur l'horizontale est supérieur à l'angle d'inclinaison (α) de chacune des cloisons arrière (40b ainsi que 41b) sur la verticale.

3. Appareil selon l'une des revendications précédentes, caractérisé en ce que les cloisons arrière (40b, 41b) inscrivent un angle entre elles et en ce qu'au moins deux modules (A, B), de préférence identiques, d'organes de transport et de guidage de cassettes (15 à 18 et 20) sont prévus entre la fente d'introduction (6h) ainsi que les organes de transport (42) qui lui sont affectés et la fente de sortie (6g), ces modules étant montés pivotants l'un par rapport à l'autre de manière que les organes de guidage (15, 16, 20) du premier module (A) soient à l'alignement soit de la fente d'introduction (6h), soit des organes de guidage (15, 16, 20) de l'autre module (B), et en ce que les organes de guidage (15, 16, 20) du second module (B) sont à l'alignement soit avec ceux du premier module (A), soit avec la fente de sortie (6g) soit avec des quatrièmes organes de transport de cassettes (44) disposés dans l'appareil (6) devant la fente de sortie (6g), de manière qu'une cassette (1) soit transférable au moyen des deux modules (A, B) de la fente d'introduction (6h) à la fente de sortie (6g).

4. Appareil selon la revendication 3, caractérisé en ce qu'un dispositif de positionnement, d'ouverture, de déchargement ou de rechargement et de fermeture de cassettes, dénommé globalement dispositif de manipulation de cassettes (21 à 32), est disposé sous chacun des modules (A, B), dispositif auquel une cassette (1) peut être transmise ou duquel une cassette est déplaçable vers l'arrière au moyen des organes correspondants de guidage (16, 20) des modules (A ainsi que B).

5. Appareil selon la revendication 4, caractérisé en ce que les organes de guidage de cassettes (16, 20) des deux modules (A, B) comportent des patins de guidage (20) pouvant osciller vers le bas et vers le haut.

6. Appareil selon la revendication 5, caractérisé en ce que chaque patin de guidage (20) comprend au moins deux fourchons de levage (20a), dont la distance qui les sépare est inférieure à une longueur la plus courte d'une cassette avançant dans la direction des patins de guidage (20) et qui peuvent saisir une cassette (1) par dessous.

7. Appareil selon l'une des revendications précédentes, caractérisé en ce qu'une autre fente (6f) d'introduction, dans chaque cas d'une cassette individuelle (1), qui est obturable de manière étanche à la lumière, est prévue dans le prolongement du module (A) pouvant être orienté par pivotement sur la fente d'introduction (6h), lorsque ce module (A) est à la position à laquelle il est à l'alignement du second module (B).

8. Appareil selon l'une des revendications précédentes, caractérisé en ce que les deux modules (A, B) sont montés rotatifs aux extrémités opposées (en 45), en ce que deux moteurs tournant en sens inverses et des éléments correspondants de transmission destinés à produire un mouvement de pivotement sont prévus pour l'orientation sélective des deux modules (A, B).

9. Appareil selon la revendication 8, caractérisé en ce que des éléments de crémaillère en courbe (46a, 46b) sont montés en position fixe entre les deux modules (A, B) sur un support commun (46).

10. Appareil selon l'une des revendications 4 à 9, caractérisé en ce qu'un pupitre (33) pour film plan est translatable sous les dispositifs de manipulation de cassettes (21 à 32), pupitre dans lequel une matière de prise de vue en feuille (2), qui provient d'une cassette (1) située dans le dispositif de manipulation (A) affecté à la fente d'introduction (6h), peut être insérée et duquel elle peut être ramenée dans la même cassette (1) transportée entre-temps dans le dispositif de manipulation (B) affecté à la fente de sortie (6g).

11. Appareil selon la revendication 10, caractérisé en ce que le pupitre (33) pour film plan contenant la matière de prise de vue (2) peut être guidé entre les deux dispositifs de manipulation ou les deux modules (A, B) devant un scanner à rayon laser (6a, 6b, 6c, 6d) et un guide d'ondes lumineuses (6c) ainsi que devant un poste de dépouillement comportant un photomultiplicateur raccordé à ce dernier et devant un poste d'effacement (6d), le photomultiplicateur étant connecté à une mémoire centrale (7).

12. Appareil selon l'une des revendications précédentes, caractérisé en ce qu'un interrupteur de proximité (40c) est disposé dans la surface de fond (40a) de manière qu'il génère un signal en coopération avec une étiquette métallique adhésive (1c) disposée sur une surface de support des cassettes, à proximité d'un angle de référence (1b), et en ce qu'en l'absence d'un tel signal, l'insertion des cassettes est interrompue.

Fig. 1

Fig. 2

Fig.3

Fig.4

13

Fig. 5

EP 0 309 874 B1

## Fig. 6

Fig. 8

Fig. 7

Fig. 9